# FASCICULE DE BREVET EUROPEEN

(11) **EP 2 038 518 B1**
(45) Date de publication et mention de la délivrance du brevet: **26.12.2012**
(21) Numéro de dépôt: 07823548.8
(22) Date de dépôt: 04.07.2007
(51) Int. Cl.: F02C 7/32, F01N 13/18, F02B 37/00

(54) **AGENCEMENT POUR LA FIXATION D'UN TURBOCOMPRESSEUR SUR UN MOTEUR A COMBUSTION D'UN VEHICULE AUTOMOBILE**
ANORDNUNG ZUR BEFESTIGUNG EINES TURBOKOMPRESSORS AM VERBRENNUNGSMOTOR EINES KRAFTFAHRZEUGS
ARRANGEMENT FOR FIXING A TURBOCOMPRESSOR TO A COMBUSTION ENGINE OF A MOTOR VEHICLE

(30) Priorité: 07.07.2006 FR 0652863
(43) Date de publication de la demande: 25.03.2009
(73) Titulaire: Renault s.a.s., 92100 Boulogne Billancourt (FR)
(72) Inventeur: DUMAS, Eric, Houilles 78800 (FR)
(86) Numéro de dépôt international: PCT/FR2007/051594
(87) Numéro de publication internationale: WO 2008/003905

(56) Documents cités:
- EP-A- 1 598 525
- EP-A1- 1 431 537
- US-A- 5 261 237

## Description

L'invention concerne un agencement pour la fixation d'un turbocompresseur sur un moteur a combustion d'un véhicule automobile.

L'invention concerne plus particulièrement un Agencement pour la fixation d'un turbocompresseur sur un moteur à combustion d'un véhicule automobile, dans lequel ;
- une collerette radiale d'un conduit de gaz est fixée sur une plaque de fixation qui délimite un orifice du turbocompresseur, et
- une patte de fixation fixe le turbocompresseur sur le moteur.

On connaît de nombreux agencements permettant de fixer un turbocompresseur sur un moteur à combustion interne d'un véhicule automobile.

Conventionnellement, le turbocompresseur comporte un orifice d'entrée des gaz qui est raccordé à un conduit d'échappement des gaz du moteur, et un orifice de sortie des gaz qui est raccordé à un conduit d'une ligne d'échappement

Un type d'agencement connu de l'art antérieur consiste à fixer le turbocompresseur sur le moteur au moyen d'au moins un élément frigide,

L'élément rigide est par exempte une patte de fixation, aussi appelée béquille de fixation, qui est fixée sur le carter turbine du turbocompresseur et sur la culasse ou le porte culasse du moteur par des moyens de fixation comme un ensemble vis-écrou.

Selon ce type d'agencement, il est nécessaire d'ajouter au moins un bossage sur le carter turbine du turbocompresseur de façon à créer une zone de fixation dans laquelle la patte de fixation est apte à être fixée.

L'ajout d'un or plusieurs bossages sur le carter turbine du turbocompresseur peut vénérer des zones massives de matière.

Or, pour une pièce obtenue en fonderie comme le carter turbine, les zones massives de matières sont néfastes à la fiabilité de la pièce.

De plus, le carter de turbine atteint des températures élevées, lesquelles sont transmises à l'ensemble vis-écrou qui est logé dans le bossage du carter turbine.

Or, l'élévation de température de l'ensemble vis-écrou engendre des contraintes thermomécaniques importantes qui peuvent nuire à la fiabilité de la fixation.

On connaît du document EP-A1-1.598.525 un agencement pour la fixation d'un turbocompresseur sur une embase au moyen d'un pied principal qui supporte la majorité de la charge du turbocompresseur.

Un autre type d'agencement, décrit dans le document FR-A-2.856.73.7, propose de fixer un turbocompresseur sur un moteur au moyen d'un collier de serrage.

Le turbocompresseur comporte ici un carter central qui est raccordé au carter turbine du turbocompresseur et à une canalisation d'huile au moyen d'une bride de raccordement.

La bride de raccordement est raccordée au collier de serrage qui est monté serré radialement sur un arbre de maintien.

L'arbre de maintien est fixé sur le moteur au moyen de deux béquilles qui sont chacune vissées dans un bossage du bloc cylindré du moteur.

Un inconvénient d'un tel Agencement pour réaliser la fixation du turbocompresseur sur le moteur est le nombre de pièces qu'il comporte et la complexité de la mise en place d'un tel agencement.

L'invention vise à remédier à cet inconvénient.

Dans ce but, l'invention propose un agencement du type décrit précédemment, caractérisé en ce que la patte de fixation est fixée à la collerette radiale du conduit de gaz et est fixée sur une culasse ou sur un couvre culasse du moteur.

Selon d'autres caractéristiques de l'invention:
- le conduit de gaz qui est fixé sur la collerette est un conduit d'échappement du turbocompresseur qui est raccordé à une ligne d'échappement des gaz du véhicule automobile
- l'agencement comporte un second conduit de gaz qui raccorde au moins un orifice d'échappement du moteur à un orifice d'entrée du turbocompresseur,
- la patte de fixation est en tôle pliée,
- l'agencement comporte une première liaison filetée pour la fixation de la patte de fixation sur la collerette radiale,
- l'agencement comporte une seconde liaison filetée pour la fixation de la patte de fixation sur la culasse ou le couvre culasse du moteur, dont l'axe est orthogonal à l'axe de la première liaison filetée,
- la collerette radiale est en tôle.

D'autres caractéristiques et avantages de l'invention apparaîtront à la lecture de la description détaillée qui va suivre pour la compréhension de laquelle on se reportera aux desseins annexés dans lesquels.
- la figure 1 est une vue éclatée en perspective qui représente un agencement pour la fixation d'un turbocompresseur sur un moteur à combustion au moyen d'une patte de fixation selon l'intention
- la figure 2 est une vue en perspective qui représente le raccordement de la patte de fixation sur une collerette d'un conduit d'échappement qui est raccordé au turbocompresseur de la figure 1;
- la figure 3 est une vue similaire à celle de la figure 2, qui représente une variante de réalisation de l'invention.

Dans la description qui va suivre, pour faciliter sa compréhension ainsi que celle des revendications, on adoptera à titre non limitatif les orientations longitudinale, verticale et transversale selon le repère L, V, T indiqué aux figures,

Des composants ou parties identiques, analogues ou similaires seront désignés par les mêmes références.

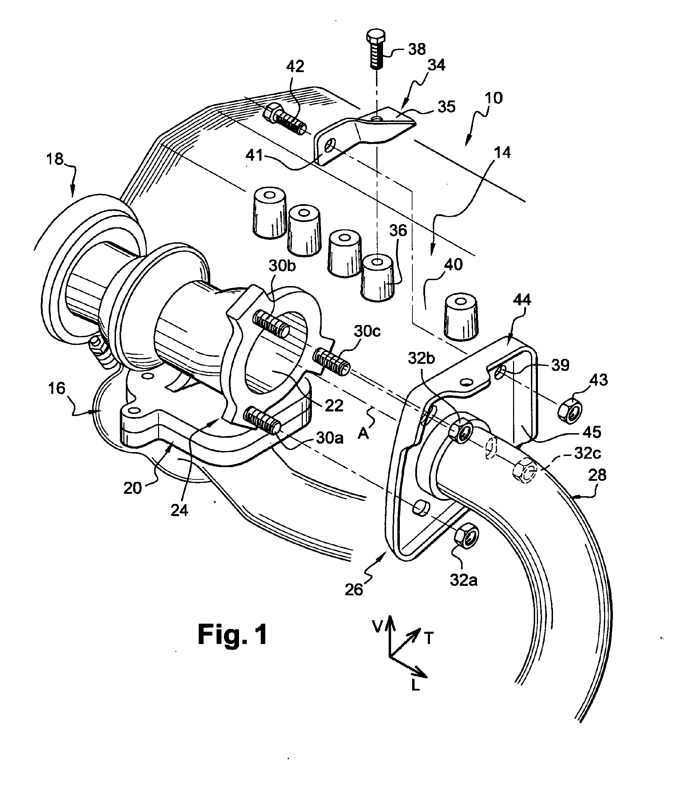

On a représenté partiellement à la figure 1 un moteur 10 à combustion interne d'un véhiculé automobile (non représenté),

De manière clastique, le moteur 10 comporte un bloc-cylindres ou bloc-moteur sur lequel sont montés une culasse, et/ou un couvre culasse, 14.

La culasse 14 comporte des conduits d'échappement internes (non représentés) qui débouchent dans un orifice d'échappement du moteur 10.

L'orifice d'échappement du moteur 10 est agencé dans une face latérale de la culasse 14 et est raccordé à un conduit d'échappement 16 des gaz du moteur 10.

Le conduit d'échappement 16 du moteur 10 est raccordé à un orifice d'entrée des gaz d'un turbocompresseur 18 au moyen d'une bride de fixation 20, de façon à alimenter le turbocompresseur 18 en gaz brûlés.

Avantageusement, l'orifice d'entrée des gaz du turbocompresseur 18 est agencé dans une partie inférieure du turbocompresseur 18 de sorte que le conduit d'échappement 16 supporte au moins en partie le turbocompresseur 18.

Après avoir alimenté la turbine du turbocompresseur 18, Les gaz brûlés s'échappent par un orifice de sortie 22 des gaz du turbocompresseur 18 d'axe A longitudinal.

L'orifice de sortie 22 des gaz débouche dans une plaque 24 de fixation radiale qui s'étend de façon transversale, à une extrémité du turbocompresseur 18.

La plaque 24 de fixation du turbocompresseur 18 est fixée sur une collerette radiale 26 qui s'étend transversalement. La collerette 26 délimite un orifice d'entrée des gaz d'axe A longitudinal d'un conduit d'échappement 28.

Le conduit d'échappement 28 est raccordé à une ligne d'échappement des gaz (non représentée) du véhicule automobile, par exemple.

La plaque 24 de fixation du turbocompresseur 18 est fixé sur la collerette radiale 26 au moyen de trois goujons filetés 30a, 30b, 30c.

Chaque goujon 30a, 30b, 30c s'étend depuis la plaque 24 de fixation et est équipé d'un écrou 32a, 32b, 32c respectivement, de façon à serrer axialement, et de manière étanche, la collerette 26 sur la plaque 24 de fixation.

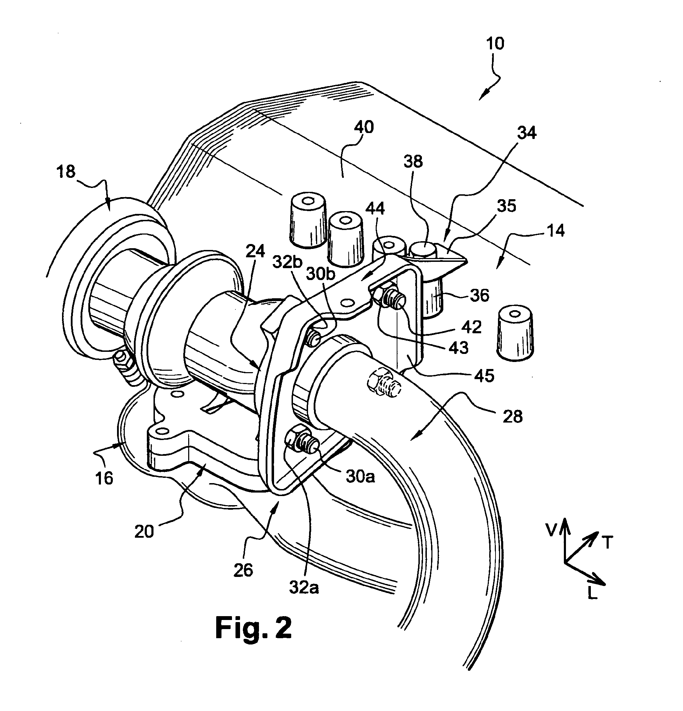

Comme on peut le voir aux figure 1 et 2, les trois goujons 30a, 30b, 30c sont ici répartis de manière régulière autour de l'orifice de sortie 22 dru turbocompresseur 18 de façon à répartir l'effort de serrage

Selon un mode préféré de réalisation de l'invention représenté aux figures 1 et 2, la collerette radiale 26 du conduit d'échappement 28 est fixée sur la culasse 14 du moteur 10 au moyen d'une patte de fixation 34 rapportée.

La patte de fixation 34 est ici réalisée en tôle et s'étend dans un palan perpendiculaire à l'axé A de l'orifice de sortie 22 des gaz du turbocompresseur 18.

Plus particulièrement, la patte de fixation 34 comporte une première portion 35 qui s'étend dans un plan transversal longitudinal et qui est fixée sur la face supérieure d'un bossage 36 de la culasse 14 du moteur 10 au moyen d'une vis 38.

Le bossage 36 est ici de forme tronconique et s'étend depuis une face supérieure 40 de la culasse 14.

La patte de fixation 34 comporte une seconde portion 41 qui est orthogonale à la première portion 35 et qui s'étend dans un plan vertical transversal.

La seconde portion 41 de la patte de fixation 34 est fixée sur une face radiale de la collerette 26, au moyen d'une vis 42 et d'un écrou 43.

A cet effet, la face radiale de la collerette 26 comporte un trou de passage 39 d'axe longitudinal.

La première portion 35 et la seconde portion 41 de la patte de fixation 34 sont ici raccordées entre elles par un bord commun.

Plus précisément, la patte de fixation 34 comporte une section en L, ce qui rigidifie structurellement la patte de fixation 34.

La collerette radiale 26 est en tôle pliée et/ou emboutie et son bord périphérique 44 annulaire est ourlé, ou rabattu, et s'étend axialement, de façon à rigidifier et renforcer la structure de la collerette 26. Toutefois, la collerette 26 peut être une pièce de fonderie.

Avantageusement, la collerette 26 est agencée proche de la culasse 14, de façon à limiter le porte-à-faux et les efforts de torsions est de flexion exerces sur la patte de fixation 34.

A cet effet, la collerette 26 est globalement de la forme d'un carré dont un tronçon 45 de son bord 44 ourlé s'étend sensiblement parallèlement à une face latérale du moteur 10.

De plus, la collerette 26 fait saillie radialement par rapport à la plaque 24 dé fixation du turbocompresseur 18 de façon à augmenter la surface d'échange thermique de la collerette 26 au contact de l'air, grâce à quoi l'agencement selon l'invention est moins sensible aux variations de températures et a la dilatation des différentes pièces.

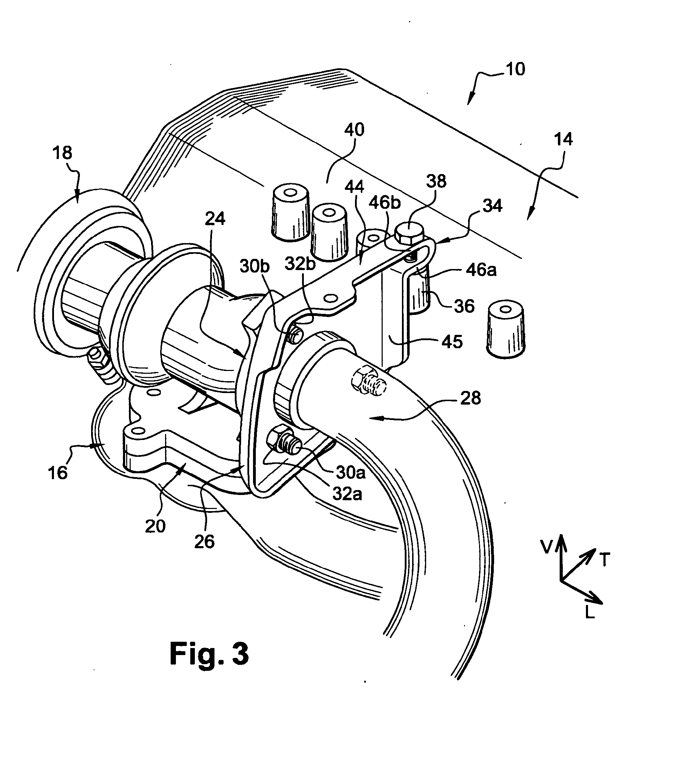

Selon un second mode de réalisation de l'invention représenté à la figure 3, la patte de fixation 34 est réalisée venue de matière avec la collerette 26.

Selon ce mode de réalisation, la patte de fixation 34 est par exemple de ia forme d'un U dont chacune des deux branches parallèles et opposées 46a, 46b s'étend horizontalement depuis la collerette 26.

Selon cette variante de réalisation de l'invention, la patte de fixation 34 est ici réalisée venue de matière avec la collerette 26.

Chacune de ces deux branches 46a, 46b de la patte de fixation 34 est traversée par une vis 38 verticale qui est serrée dan un trou taraudé du bossage 36, de façon à fixer la patte de fixation 34 sur le moteur 10.

Selon une variante non représentée du seconde mode de réalisation, la patte de fixation 34 est de la forme d'une lame qui s'étend dans un plan horizontal.

Selon cette variante de réalisation de l'invention, la patte de fixation 34 est ici réalisée venue de matière avec la collerette 26.

Toutefois, la patte de fixation 34 peut être soudée ou fixée sur la collerette 26 avec des moyens de fixation connus de l'état de la technique.

Selon un troisième mode de réalisation non représenté de l'invention, la patte de fixation 34 est fixée sur une face radiale de la plaque 24 de fixation du turbocompresseur 18.

## Revendications

1. Agencement pour la fixation d'un turbocompresseur (18) sur un moteur (10) à combustion d'un véhicule automobile, dans lequel :
- une collerette (26) radiale d'un conduit (28) de gaz est fixée sur une plaque de fixation (24) qui délimite un orifice (22) du turbocompresseur (18), et
- une patte de fixation (34) fixe le turbocompresseur (18) sur le moteur (10),
**caractérisé en ce que** la patte de fixation (34) est fixée à la collerette (26) radiale du conduit (28) de gaz et est fixée sur une culasse (14) ou sur un couvre culasse du moteur (10).

2. Agencement selon l'une quelconque des revendications précédentes, **caractérisé en ce que** le conduit (28) de gaz qui est fixé sur la collerette (26) est un conduit (28) d'échappement du turbocompresseur (18) qui est raccordé à une ligne d'échappement des gaz du véhicule automobile.

3. Agencement selon l'une quelconque des revendications précédentes, **caractérisé en ce que** l'agencement comporte un second conduit (16) de gaz qui raccorde au moins un orifice d'échappement du moteur (10) à un orifice d'entrée du turbocompresseur (18).

4. Agencement selon l'une quelconque des revendications précédentes, **caractérisé en ce que** la patte de fixation (34) est en tôle pliée.

5. Agencement selon l'une quelconque des revendications précédentes, **caractérisé en ce que** l'agencement comporte une première liaison filetée (42) pour la fixation de la patte de fixation (34) sur la collerette (26) radiale.

6. Agencement selon la revendication précédente, **caractérisé en ce que** l'agencement comporte une seconde liaison filetée (38) pour la fixation de la patte de fixation (34) sur la culasse (14) ou le couvre culasse du moteur (10), dont l'axe est orthogonal à l'axe de la première liaison filetée (42).

7. Agencement selon l'une quelconque des revendications précédentes, **caractérisé en ce que** la collerette (26) radiale est en tôle.

## Claims

1. Arrangement for the fastening of a turbocharger (18) to a combustion engine (10) of a motor vehicle, in which:
- a radial collar (26) of a gas duct (28) is fastened to a fastening plate (24) which delimits an orifice (22) of the turbocharger (18), and
- a fastening mount (34) fastens the turbocharger (18) to the engine (10),
**characterized in that** the fastening mount (34) is fastened to the radial collar (26) of the gas duct (28) and is fastened to a cylinder head (14) or to a cylinder-head cover of the engine (10).

2. Arrangement according to Claim 1, **characterized in that** the gas duct (28) which is fastened to the collar (26) is an exhaust duct (28) of the turbocharger (18) which is connected to a gas exhaust line of the motor vehicle.

3. Arrangement according to either one of the preceding claims, **characterized in that** the arrangement comprises a second gas duct (16) which connects at least one exhaust orifice of the engine (10) to an intake orifice of the turbocharger (18).

4. Arrangement according to any one of the preceding claims, **characterized in that** the fastening mount (34) is made of bent metal sheet.

5. Arrangement according to any one of the preceding claims, **characterized in that** the arrangement comprises a first threaded connecting element (42) for fastening the fastening mount (34) to the radial collar (26).

6. Arrangement according to the preceding claim, **characterized in that** the arrangement comprises a second threaded connecting element (38) for fastening the fastening mount (34) to the cylinder head (14) or the cylinder-head cover of the engine (10) of which the axis is orthogonal to the axis of the first threaded connecting element (42).

7. Arrangement according to any one of the preceding claims, **characterized in that** the radial collar (26) is made of metal sheet.

## Patentansprüche

1. Anordnung zur Befestigung eines Turbokompressors (18) an einem Verbrennungsmotor (10) eines Kraftfahrzeugs, bei der:
- ein radialer Kragen (26) einer Gasleitung (28) an einer Befestigungsplatte (24) befestigt ist, die eine Öffnung (22) des Turbokompressors (18) begrenzt, und
- eine Befestigungslasche (34) den Turbokompressor (18) am Motor (10) befestigt,
**dadurch gekennzeichnet, dass** die Befestigungslasche (34) am radialen Kragen (26) der Gasleitung (28) und an einem Zylinderkopf (14) oder an einer Zylinderkopfhaube des Motors (10) befestigt ist.

2. Anordnung nach Anspruch 1, **dadurch gekennzeichnet, dass** die Gasleitung (28), die am Kragen (26) befestigt ist, eine Abgasleitung (28) des Turbokompressors (18) ist, die an eine Abgasanlage des Kraftfahrzeugs angeschlossen ist.

3. Anordnung nach einem der vorhergehenden Ansprüche, **dadurch gekennzeichnet, dass** die Anordnung eine zweite Gasleitung (16) aufweist, die mindestens eine Abgasöffnung des Motors (10) an eine Eingangsöffnung des Turbokompressors (18) anschließt.

4. Anordnung nach einem der vorhergehenden Ansprüche, **dadurch gekennzeichnet, dass** die Befestigungslasche (34) aus Falzblech ist.

5. Anordnung nach einem der vorhergehenden Ansprüche, **dadurch gekennzeichnet, dass** die Anordnung eine erste Gewindeverbindung (42) zur Befestigung der Befestigungslasche (34) am radialen Kragen (26) aufweist.

6. Anordnung nach dem vorhergehenden Anspruch, **dadurch gekennzeichnet, dass** die Anordnung eine zweite Gewindeverbindung (38) zur Befestigung der Befestigungslasche (34) am Zylinderkopf (14) oder der Zylinderkopfhaube des Motors (10) aufweist, deren Achse orthogonal zur Achse der ersten Gewindeverbindung (42) ist.

7. Anordnung nach einem der vorhergehenden Ansprüche, **dadurch gekennzeichnet, dass** der radiale Kragen (26) aus Blech ist.
